Europäisches Patentamt

European Patent Office

Office européen des brevets

(11) Veröffentlichungsnummer: **0 227 942**
**A2**

(12) **EUROPÄISCHE PATENTANMELDUNG**

(21) Anmeldenummer: 86116193.3

(51) Int. Cl.⁴: **C09D 5/44**

(22) Anmeldetag: 22.11.86

The title of the invention has been amended (Guidelines for Examination in the EPO, A-III, 7.3).

(30) Priorität: 29.11.85 DE 3542170

(43) Veröffentlichungstag der Anmeldung:
08.07.87 Patentblatt 87/28

(84) Benannte Vertragsstaaten:
AT BE CH DE ES FR GB IT LI NL SE

(71) Anmelder: BASF Lacke + Farben
Aktiengesellschaft
Max-Winkelmann-Strasse 80
D-4400 Münster(DE)

(72) Erfinder: Schupp, Eberhard, Dr.
Tilsiter Weg 4
D-6830 Schwetzingen(DE)
Erfinder: Osterloh, Rolf, Dr.
Am Wehrhaus 16a
D-6718 Gruenstadt(DE)
Erfinder: Loch, Werner, Dr.
In der Bleiche 2
D-6701 Erpolzheim(DE)
Erfinder: Ahlers, Klaas, Dr.
Foehrenweg 21
D-4400 Muenster(DE)

(74) Vertreter: Schweiss, Werner, Dr. et al
BASF Aktiengesellschaft Patentabteilung
Carl-Bosch-Strasse 38
D-6700 Ludwigshafen(DE)

(54) **Bindemittel für die kathodische Elektrotauchlackierung.**

(57) Die Erfindung betrifft Bindemittel für die kathodische Elektrotauchlackierung auf Basis von stickstoffbasische Gruppen tragenden Polyadditions-/Polykondensationsprodukten, die durch Protonierung mit Säure wasserverdünnbar sind, und mindestens einem Vernetzer für diese Polyadditions-/Polykondensationsprodukte, ihre Verwendung und daraus hergestellte Elektrotauchbäder.

Dieses Bindemittel besteht im wesentlichen aus einem Gemisch aus

(A) 50 bis 90 Gew.% eines stickstoffbasische Gruppen tragenden Polyadditions-/Polykondensationsproduktes, erhältlich durch Umsetzung von

(a) einem im wesentlichen epoxidgruppenfreien Additionsprodukt aus sekundärem Amin und Polyepoxidverbindung mit

(b) einem Kondensationsprodukt aus einem Diamin/Polyepoxid-Additionsprodukt, das in Gegenwart eines Diaminüberschusses hergestellt und nach vollständiger Umsetzung der Epoxidgruppen von überschüssigem Diamin abgetrennt worden ist, mit mindestens einer Mono-und/oder Dicarbonsäure mit mindestens 6 Kohlenstoffatomen und

(B) 10 bis 50 Gew.% eines Vernetzungsmittels, das bei Raumtemperatur mit Komponente (A) nicht reagiert, bei erhöhter Temperatur jedoch mit Komponente (A) unter Vernetzung reagiert.

Diese Bindemittel eignen sich besonders für die kathodische Elektrotauchlackierung elektrisch leitfähiger Substrate.

## Bindemittel für die kathodische Elektrotauchlackierung

Die vorliegende Erfindung betrifft durch Protonieren mit Säure wasserverdünnbare Bindemittel, welche zur Herstellung von kathodischen Elektrotauchlacken geeignet sind.

In der DE-AS 20 57 799 wird ein Verfahren zur kathodischen elektrophoretischen Abscheidung eines in Wasser dispergierten, ionischen, organischen Harzes, welches aus einem positiv geladenen, aminhaltigen Harz und einem blockierten, multifunktionellen Isocyanat besteht, beschrieben.

In den EP 12 463 und EP 40 867 werden hitzehärtbare Überzugsmittel beschrieben, welche über eine Umesterungsreaktion vernetzen. Die eingesetzten Vernetzer enthalten dabei β-Hydroxyestergruppierungen.

Der DE-OS 27 37 375 sind Umsetzungsprodukte von Polyepoxidharzen mit Polyaminen zu entnehmen, die pro Mol des Adduktes mit mindestens 2 Molen eines Monoepoxides oder einer Monocarbonsäure - (Kettenlänge $C_8$ bis $C_{24}$) umgesetzt werden, wobei Monoepoxide bevorzugt sind. Als Vernetzungsmittel dienen Amino-und Phenoplaste.

In der DE-OS 33 11 514 werden Harnstoffkondensationsprodukte beschrieben, die sich als Bindemittelkomponenten in hitzehärtbaren Lacken eignen. Im Beispiel 6 dieser Anmeldung wird ein Harnstoffkondensationsprodukt zusammen mit einem Kondensationsprodukt aus einem Hexamethylendiamin/Polyepoxid-Additionsprodukt und dimerisierter Fettsäure zur Herstellung eines kathodisch abscheidbaren Elektrotauchlackes verwendet, der bereits bei 140°C Einbrenntemperatur sehr gute mechanische und korrosionsschützende Eigenschaften besitzt. Nachteilig bei diesem Bindemittel sind lediglich die leichte Oberflächenrauhigkeit und eine geringfügige Neigung zur Sedimentbildung im Bad.

Aufgabe der vorliegenden Erfindung war es, die beschriebenen Nachteile zu beheben und dabei das sonstige gute Eigenschaftsniveau, vor allem auch den pH-Wert des Elektrotauchbades von > pH 7, der wirksam vor Anlagen-Korrosion schützt, zu erhalten. Diese Aufgabe wurde durch die neuartige Bindemittelzusammensetzung gemäß der vorliegenden Erfindung gelöst.

Gegenstand der vorliegenden Erfindung ist ein Bindemittel für die kathodische Elektrotauchlackierung auf Basis von stickstoffbasische Gruppen tragenden Polyadditions-/Polykondensationsprodukten, die durch Protonierung mit Säure wasserverdünnbar sind, und mindestens einem Vernetzer für diese Polyadditions-/Polykondensationsprodukte, das dadurch gekennzeich net ist, daß das Bindemittel im wesentlichen besteht aus einem Gemisch aus

(A) 50 bis 90 Gew.% eines stickstoffbasische Gruppen tragenden Polyadditions-/Polykondensationsproduktes, erhältlich durch Umsetzung von

(a) einem im wesentlichen epoxidgruppenfreien Additionsprodukt aus sekundärem Amin und Polyepoxidverbindung
mit

(b) einem Kondensationsprodukt aus einem Diamin/Polyepoxid-Additionsprodukt, das in Gegenwart eines Diaminüberschusses hergestellt und nach vollständiger Umsetzung der Epoxidgruppen von überschüssigem Diamin abgetrennt worden ist, mit mindestens einer Mono-und/oder Dicarbonsäure mit mindestens 6 Kohlenstoffatomen, mit der Maßgabe, daß die Umsetzung von (a) mit (b) bei Temperaturen zwischen etwa 100 und 250°C durchgeführt worden ist,
und

(B) 10 bis 50 Gew.% eines Vernetzungsmittels, das bei Raumtemperatur mit Komponente (A) nicht reagiert, bei erhöhter Temperatur jedoch mit Komponente (A) unter Vernetzung reagiert, wobei die Summe der unter (A) und (B) genannten Prozentzahlen 100 ist.

Vorzugsweise wird das Kondensationsprodukt (b) aus Diamin/Polyepoxid-Additionsprodukt und Mono-und/oder Dicarbonsäure mit mindestens 6 Kohlenstoffatomen in Gegenwart der Komponente (a) hergestellt.

Bevorzugt ist außerdem, als sekundäres Amin für die Herstellung der Komponente (a) zumindest teilweise ein Amidgruppen enthaltendes sekundäres Amin, das durch Umsetzung von Mono-und/oder Dicarbonsäuren mit mindestens 6 Kohlenstoffatomen oder deren Estern mit Diaminen, die pro Molekül eine primäre und eine sekundäre Aminogruppe tragen, wobei die sekundäre Aminogruppe eine β-Hydroxyalkylgruppe trägt erhalten worden ist, einzusetzen.

Bevorzugt ist ferner, als Dicarbonsäure zur Herstellung der Komponente (b) eine dimerisierte un-gesättigte $C_{10}$-$C_{24}$-Fettsäure ("Dimerfettsäure"), bzw. als Monocarbonsäure eine gesättigte oder ungesättigte $C_8$-$C_{24}$-Fettsäure, einzusetzen.

Als sekundäres Amin zur Herstellung der Komponente (a) wird vorzugsweise ein Dialkylamin eingesetzt, das 2 bis 36 Kohlenstoffatome sowie gegebenenfalls noch funktionelle Gruppen enthält.

Geeignete Vernetzungsmittel (B) sind vorzugsweise mehrwertige geblockte Isocyanate, Aminoplast-oder Phenoplastharze, mehrfach aminomethylierte Polyphenole, über Esteraminolyse und/oder Umesterung härtende Vernetzer oder Harnstoffkondensationsprodukte.

Gegenstand der vorliegenden Erfindung ist auch die Verwendung der durch Protonieren mit Säure wasserverdünnbaren erfindungsgemäßen Bindemittel in Form einer wäßrigen Dispersion, die gegebenenfalls Pigmente, organische Lösemittel und/oder weitere Hilfsstoffe enthält, als Überzugsmittel, ein wäßriges Lackbad für die kathodische Elektrotauchlackierung, das 5 bis 30 Gew.% des erfindungsgemäßen Bindemittels enthält, sowie der mit einem Lacküberzug versehene Gegenstand, der durch Aufbringen des erfindungsgemäßen Bindemittels bzw. Überzugsmittels und Einbrennen erhalten worden ist.

Zu den Aufbaukomponenten des erfindungsgemäßen Bindemittels ist im einzelnen folgendes zu sagen.

Komponente (A) ist ein stickstoffbasische Gruppe tragendes Polyadditions-/Polykondensationsprodukt.

Als Polyepoxide können für die Herstellung der Komponenten (a) und (b) die üblichen Glycidylpolyether von mehrwertigen Phenolen verwendet werden. Beispiele für derartige mehrwertige Phenole sind Resorcin, Hydrochinon, p,p'-Dihydroxyphenylpropan (Bisphenol A), p,p'-Dihydroxybenzophenon, p,p'-Dihydroxydiphenyl, p,p'-Dihydroxydiphenylethan, Bis-(2-hydroxynaphthyl)-methan, 1,5-Dihydroxynaphthylen und Novolake; Bisphenol A wird bevorzugt. Die Polyphenole lassen sich durch Umsetzung mit Epihalogenhydrin, insbesondere Epichlorhydrin, in die Polyepoxide überführen. Polyepoxide mit niedrigem Molekulargewicht entstehen bei Verwendung eines großen Überschusses an Epihalogenhydrin, solche mit höherem Molekulargewicht werden bei Verwendung von geringeren Mengen an Epihalogenhydrin, oder durch Umsetzung von Polyepoxiden mit niederem Molekulargewicht mit Polyphenol erhalten. Zur Herstellung der erfindungsgemäßen Bindemittel werden bevorzugt Diglycidylether von Bisphenol A mit Epoxidäquivalentgewichten von etwa 180 bis etwa 2500 eingesetzt.

Zur Herstellung der Komponente (a) werden die Polyepoxide mit sekundären Aminen umgesetzt. Die Umsetzung kann dabei in Substanz oder unter Zuhilfenahme von Lösemitteln erfolgen. Die Umsetzungstemperatur kann in weiten Grenzen variiert werden. Geeignet sind z.B. Temperaturen von 20 bis 200°C, zur Erzielung einer raschen Umsetzung ist leichtes Erwärmen auf 50 bis 150°C zweckmäßig. Als sekundäre Amine können sekundäre Monoamine, z.B. Methylethanolamin, Ethylethanolamin, Methylisopropanolamin, Dialkanolamine, wie Diethanolamin oder Diisopropanolamin verwendet werden. Die sekundären Monoamine können auch noch weitere funktionelle Gruppen enthalten, sofern diese die Umsetzung der sekundären Amine mit den Polyepoxiden nicht stören. Beispiele solcher funktionellen Gruppen sind neben Hydroxylgruppen Ester-, Ether-oder Amidgruppen. Ein geeignetes sekundäres Monoamin mit einer Amidgruppe ist z.B. das Umsetzungsprodukt aus einem primär-sekundären Diamin, z.B. Aminoethylethanolamin und einer Carbonsäure, da sich bei dieser Umsetzung überwiegend das Amid aus der primären Aminogruppe bildet und daher ein sekundäres Monoamin entsteht. Die genannten sekundären Monoamine können allein oder als Mischungen eingesetzt werden, auch können zusätzlich sekundäre Diamine und in untergeordnetem Maße primäre Monoamine oder primär/sekundäre oder diprimäre Diamine eingesetzt werden. Die gegebenenfalls mitverwendeten Diamine können zusätzlich andere, die Umsetzung mit Polyepoxiden nicht störende Gruppen enthalten. So lassen sich vorteilhaft Amidamine aus primär/sekundären Diaminen, z.B. Aminoethylethanolamin und Dicarbonsäuren, z.B. dimerisierten $C_{10}$-$C_{24}$-Fettsäuren als sekundäre Diamine verwenden.

Zur Herstellung der Komponente (a) werden die sekundären Amine mit den Polyepoxidverbindungen im allgemeinen in solchen Mengen umgesetzt, daß pro Epoxidgruppe der Polyepoxidverbindung etwa eine Aminogruppe des sekundären Amins eingesetzt wird.

Zur Herstellung der Komponente (b) wird ein Diamin/Polyepoxid-Additionsprodukt mit Mono-und/oder Dicarbonsäuren kondensiert. Das dabei eingesetzte Diamin/Polyepoxid-Additionsprodukt wird durch Umsetzung einer oder mehrerer der oben beschriebenen Polyepoxidverbindungen, vorzugsweise auf Basis von Bisphenol A, mit überschüssigem Diamin und Abtrennung des Überschusses nach vollständiger Umsetzung der Epoxidgruppen gewonnen. Als Diamine kommen vor allem primäre Diamine mit 2 bis 14 Kohlenstoffatomen in Betracht, die auch noch anderen Gruppen, z.B. Ethergruppen, enthalten können. Beispiele geeigneter Diamine sind Ethylendiamin, 1,3-Propylendiamin, 1,4-Butylendiamin, 1,5-Pentamethylendiamin, 2-Methylpentamethylendiamin-1,5 sowie das besonders bevorzugte Hexamethylendiamin, außerdem 4,7,10-Trioxatridecan-1,13-diamin, 4,7-Dioxadecan-1,10-diamin, 4,9-Dioxadodecan-1,12-diamin, 4,4'-Methylenbiscyclohexanamin, 1,4-Cyclohexandiamin und Isophorondiamin.

Zur Herstellung der Diamin/Polyepoxid-Additionsprodukte wird im allgemeinen das Amin vorgelegt und die Polyepoxidverbindung in der Schmelze, oder als Lösung zugesetzt. Die Umsetzung kann bei Raumtemperatur durchgeführt werden, zweckmäßigerweise wählt man jedoch zur Erhöhung der Reaktionsgeschwindigkeit eine höhere Temperatur von etwa 40 bis 150°C. Pro Äquivalent Epoxid werden üblicherweise 2 bis 10, bevorzugt 2,5 bis 8 Äquivalente Amine eingesetzt. Nach Beendigung der Reaktion ist der Epoxidwert (mol/100 g) auf Null abgesunken. Danach wird das überschüssige Amin entfernt. Zur Entfernung des Amins wird die Mischung unter vermindertem Druck erhitzt. Bei relativ schwer flüchtigen Aminen, wie Hexamethylendiamin können Temperaturen bis etwa 200°C bei einem Druck von 50 mbar angebracht sein.

Eine bequeme Methode zum Entfernen schwerflüchtiger Amine ist der Einsatz von Fallfilm-oder Dünnschichtverdampfern, die eine weitgehende, wenn nicht vollständige Entfernung auch relativ hochsiedender Diamine gewährleisten. Das erhaltene Diamin/Polyepoxid-Additionsprodukt wird anschließend mit mindestens einer Mono-und/oder Dicarbonsäure mit mindestens 6 Kohlenstoffatomen kondensiert. Die Säuren können dabei gegebenenfalls . auch in Form ihrer Ester eingesetzt werden. In diesem Fall wird der Esteralkohol während der Kondensation abgespalten.

Geeignete Monocarbonsäuren sind z.B. $\alpha$-Ethylhexansäure, iso-Nonansäure, Capryl-, Caprin-, Stearin-Säure, Linol-, Linolen-Säure sowie Benzoesäure.

Geeignete Dicarbonsäuren sind z.B. Adipinsäure, Sebacinsäure, Nonan-, Decan-, Dodecandicarbonsäure, dimerisierte, ungesättigte $C_{10}$-$C_{24}$-Fettsäure ("Dimerfettsäuren"), z.B. Pripol®1014 der Firma Unilever, sowie Phthalsäure und Terephthalsäure oder Gemische dieser Dicarbonsäuren.

Die Kondensation der Diamin/Polyepoxid-Additionsprodukte mit den Carbonsäuren wird bei Temperaturen von 100 bis 250°C, vorzugsweise bei 150 bis 200°C durchgeführt. Zur leichteren Entfernung des bei der Kondensation gebildeten Wassers kann ein als Schleppmittel geeignetes Lösemittel, z.B. Toluol oder Xylol zugegeben werden.

Die Mono-und/oder Dicarbonsäuren werden in solchen Mengen eingesetzt, daß auf eine primäre Aminogruppe des Diamin/Polyepoxid-Additionsprodukts weniger als eine Carboxylgruppe der Carbonsäure kommt. Im allgemeinen liegt das Verhältnis von primären Aminogruppen zu Carboxylgruppen bei 1,7:1 bis 5:1.

Die Umsetzung von (a) und (b) wird bei Temperaturen zwischen etwa 100 und 250°C, vorzugsweise 150 bis 200°C durchgeführt. In vielen Fällen ist es zweckmäßig, die Kondensation des Diamin/Polyepoxid-Additionsprodukts mit den Mono-und/oder Dicarbonsäuren in Gegenwart der Komponente (a) durch zuführen, da dabei die Kondensation zwischen (a) und (b) gleichzeitig abläuft und somit ein Reaktionsschritt eingespart wird.

Die Natur der Kondensation zwischen (a) und (b) ist nicht genau bekannt. Offensichtlich kommt es zu einer partiellen Übertragung von Carbonsäureestern von (b) nach (a) bzw. bei Verwendung von Dicarbonsäuren zu einem partiellen Verbund zwischen (a) und (b) über Dicarbonsäurebrücken. In vielen Fällen lassen sich besonders günstige Resultate erzielen, wenn die Komponenten (a) Amidgruppen enthalten, was z.B. durch Verwendung der erwähnten sekundären Amine, welche durch Kondensation aus primär/sekundären Diaminen mit Mono-bzw. Dicarbonsäuren erhältlich sind, erreicht werden kann.

Die Mengenverhältnisse, in denen die Komponenten (a) und (b) eingesetzt werden, können in weiten Bereichen, z.B. von 0,1:1 bis 9:1 schwanken. Für den industriellen Einsatz wird man bemüht sein, einen relativ großen Anteil der leichter zugänglichen Komponente (a) zu verwenden und wird daher Mengenverhältnisse von etwa 1:1 bis 3:1 bevorzugen.

Als Komponente (B) kommen im wesentlichen alle für den Einsatz in kathodischen Elektrotauchlacken geeigneten Vernetzer in Betracht.

Geeignete Vernetzungsmittel (B) sind z.B. Aminoplastharze, wie Harnstoff-Formaldehyd-Harze, Melaminharze oder Benzoguanaminharze, geblockte Isocyanatvernetzer, über Esteraminolyse und/oder Umesterung härtende Vernetzer mit im Mittel mindestens zwei aktivierten Estergruppen pro Molekül, z.B. $\beta$-Hydroxyalkylester-Vernetzer gemäß EP 0040867 und Carbalkoxymethylester-Vernetzer gemäß der Deutschen Patentanmeldung P 32 33 139.8 und Harnstoffkondensationsprodukte, wie sie in der DE-OS 33 11 514 beschrieben sind.

Das Verhältnis der Komponenten (A) und (B) richtet sich nach Art und Anzahl der vernetzungsaktiven Gruppen in beiden Komponenten. Im allgemeinen wird ein Verhältnis (A) zu (B) von 1:1 bis 9:1, bevorzugt jedoch 1:1 bis 5:1, besonders bevorzugt 1,5:1 bis 4:1 verwendet.

Zur Herstellung von Überzugsmitteln können dem Bindemittel noch weitere Stoffe, wie Pigmente, Hilfsmittel, Lösemittel und Härtungskatalysatoren zugesetzt werden.

Die so hergestellten Überzugsmittel können durch übliche Methoden, wie Spritzen, Tauchen, Gießen und Rakeln auf Substrate, wie Holz, Glas, Kunststoff oder Metall aufgebracht werden.

Die Aushärtung der Überzüge erfolgt je nach Art des Vernetzers zwischen 80 und 220°C während 3 bis 40 Minuten.

Nach Protonieren mit Säuren werden die erfindungsgemäßen Bindemittel wasserverdünnbar und können außer in herkömmlicher Weise auch durch kathodische Elektrotauchlackierung appliziert werden. Dabei werden elektrisch leitende Substrate beschichtet, wie Metallteile oder Bleche aus Messing, Kupfer, Zink, Aluminium, Eisen und Stahl, die gegebenenfalls chemisch vorbehandelt, z.B. phosphatiert sind.

Zum Protonieren der Bindemittel können anorganische und organische Säuren eingesetzt werden. Besonders geeignet hierfür sind: Ameisensäure, Essigsäure, Propionsäure, Milchsäure und Phosphorsäure. Für die kathodische Elektrotauchlackierung wird im allgemeinen ein Feststoffgehalt des Elektrotauchbades von 5 bis 45 Gew.%, bevorzugt 10 bis 30 Gew.% eingestellt. Die Abscheidung wird üblicherweise bei Temperaturen von 15 bis 40°C während 30 bis 360 Sekunden durchgeführt. Der pH-Wert des Bades wird zwischen 4,5 und 9,0, bevorzugt zwischen 5,0 und 8,0, besonders bevorzugt zwischen 6,8 und 8,0 eingestellt. Die Abscheidespannung wird zwischen 50 und 500 Volt eingestellt. Der zu beschichtende Gegenstand wird als Kathode geschaltet. Der abgeschiedene Film wird bei Temperaturen > 90°C eingebrannt.

Herstellung der Komponenten (A):

Komponente (A 1):

Zunächst wurde ein Amidgruppen tragendes sekundäres Diamin hergestellt. Dazu wurden in einem Reaktor 290 g Dimerfettsäure (Pripol 1010 der Fa. Unichema mit maximal 3 % Trimer und 1 % Monomer), und 104 g N-Aminoethylethanolamin auf 190 bis 195°C erhitzt, bis 18 Teile Wasser abdestilliert waren.

In einem zweiten Reaktor wurde ein Diamin/Polyepoxid-Additionsprodukt hergestellt: Es wurden 400 g Hexamethylendiamin auf 80°C erwärmt. Anschließend wurde eine 80 gew.%ige Lösung von 400 g eines handelsüblichen Epoxidharzes auf Basis von 2,2-Bis-(4-hydroxyphenyl)-propan mit einem Epoxidäquivalentgewicht von 480 in Toluol zugefügt. Nach Abklingen der anfänglich exothermen Reaktion ließ man 30 Minuten bei 100°C ausreagie ren. Dann wurde überschüssiges Hexamethylendiamin und Toluol im Vakuum abdestilliert, wobei eine Innentemperatur von 180°C erreicht wurde. Anschließend wurden in einem Dünnschichtverdampfer bei 0,5 mbar und 180°C die verbliebenen Spuren von freiem Amin abgezogen. Das Produkt hatte eine Aminzahl von 160 mg KOH/g und einen Erweichungspunkt von 95°C.

In einem weiteren Gefäß wurden 105 g eines handelsüblichen Epoxidharzes auf Basis von 2,2-Bis-(4-hydroxyphenyl)-propan mit einem Äquivalentgewicht von 480 in 39 g Xylol gelöst. Es wurden bei 70°C 11,06 g Methylethanolamin und 22,6 g des oben beschriebenen Amidgruppen tragenden sekundären Diamins, welches zuvor zur leichteren Handhabung auf 60°C erwärmt worden war, zugegeben. Nach Abklingen der exothermen Reaktion wurde noch 1 Stunde bei 100°C gehalten. Nun wurden 68,8 g des Diamin/Polyepoxid-Additionsprodukts (als Feststoff) und 10,3 g Dimerfettsäure (Pripol 1010) zugegeben und das gebildete Wasser zusammen mit einem Teil des Xylols abdestilliert, bis eine Temperatur von 195°C erreicht worden war. Nach 30 Minuten bei dieser Temperatur wurde gekühlt und bei Erreichen von 100°C mit 78 g Isobutanol auf einen Feststoffgehalt von 70 Gew.% verdünnt. Die Viskosität des Produktes betrug, gemessen bei 75°C mit einem Platte/Kegel-Viskosimeter der Fa. Epprecht, 1800 mPas.

Komponente (A 2)

250 g des zur Herstellung der Komponente (A 1) verwendeten Epoxidharzes mit einem Epoxidäquivalentgewicht von 480 wurden in 52 g Xylol gelöst, mit 37,5 g Methylethanolamin versetzt und 1 Stunde auf 100°C erhitzt. Anschließend wurden 287,5 g des bei Komponente (A 1) beschriebenen Diamin/Polyepoxid-Additionsprodukts und 72 g Dimerfettsäure (Pripol 1010) zugegeben und während 90 Minuten Wasser ausgekreist, wobei gegen Ende des Auskreisens die Temperatur auf 190 bis 195°C stieg. Nach dem Abkühlen auf 100°C wurde mit 223 g Isobutanol auf einen Feststoffgehalt von 70 Gew.% verdünnt. Das Produkt hatte eine Viskosität von 1360 mPas, gemessen bei 75°C und eine Säurezahl von 2 bis 3 mg KOH/g.

Komponente (A 3):

1000 g Epoxidharz auf Basis von Bisphenol A mit einem Epoxid-Äquivalentgewicht von 490 wurden zusammen mit 50 g Xylol aufgeschmolzen. Bei 60°C wurden 215 g des zur Herstellung der Komponente (A 1) eingesetzten Amidgruppen tragenden sekundären Diamins und 147,5 g Diethanolamin zugegeben und der Ansatz 1 Stunde auf 100°C erhitzt. Danach werden 579 g des bei Komponente (A 1) beschriebenen Diamin/Polyepoxid-Additionsprodukts, 62 g Dimerfettsäure (Pripol 1010) und 30,5 g Leinölfettsäure zugesetzt und anschließend erhitzt. Ab etwa 150°C wurde das bei der Amidbildung freiwerdende Wasser ausgekreist und die Temperatur langsam gesteigert. Nach 2 Stunden war die Reaktion beendet und die Temperatur betrug 195°C. Es wurde abgekühlt und bei 100°C mit 718 g Isobutanol auf einen Feststoffgehalt von 70 Gew.% verdünnt. Das Produkt hatte eine Viskosität von 1360 mPas, gemessen bei 75°C.

Komponente (A 4) (Vergleichsbeispiel):

Zunächst wurde wie bei Komponente (A 2) verfahren und aus Epoxidharz und Methylethanolamin Komponente ($a_2$) hergestellt. Diese wurde anschließend mit Isobutanol auf 70 Gew.% verdünnt.

In einem zweiten Gefäß wurde aus dem Diamin/Polyepoxid-Additionsprodukt und Dimerfettsäure (Pripol 1010) unter Zufügung von etwas Xylol unter Auskreisen von Wasser bei Temperaturen von 190 bis 195°C die Komponente ($b_2$) hergestellt und nach dem Abkühlen auf 100°C und Isobutanol auf 70 Gew.% verdünnt. Die Komponenten wurden im Verhältnis 2 g ($a_2$) und 1 Teil ($b_2$) bei Raumtemperatur gemischt.

<u>Herstellung der Komponenten (B):</u>

Komponente (B 1):

504 g trimerisiertes Hexamethylendiisocyanat wurden in 382 g Methylisobutylketon gelöst. Unter Kühlen tropfte man bei 70°C 388 g Dibutylamin hinzu. Man rührte bis der Isocyanat-Wert nahe Null war. Das Produkt hatte einen Feststoffgehalt von 70 Gew.%.

Komponente (B 2):

1340 g Trimethylolpropan, 3600 g Harnstoff, 3870 g Dibutylamin, 1740 g Hexamethylendiamin und 3570 g 3,3'-Dimethyl-4,4'-diaminodicyclohexylmethan wurden langsam erhitzt. Ab 120°C kam es zur Abspaltung von Ammoniak und der Harnstoff geht in Lösung. Innerhalb von 2 Stunden wurde die Temperatur auf 155°C erhöht, wobei starker Rückfluß auftrat und große Mengen eines weichen, kristallinen Niederschlags ausfielen. Nach weiteren 5 Stunden unter Rückfluß hatte sich der Niederschlag wieder aufgelöst und eine Temperatur von 165°C wurde erreicht. Nun wurden innerhalb von 2 Stunden 3870 g Dibutylamin zugetropft und nach beendeter Zugabe noch 8 Stunden auf 185°C erhitzt. Anschließend wurden bei dieser Temperatur 3600 g Dibutylamin im Vakuum abgezogen und nach dem Abkühlen auf 130°C mit 5170 g Toluol verdünnt. Das Produkt war eine farblose, viskose Flüssigkeit mit einem Feststoffgehalt von 70 Gew.%.

Komponente (B 3):

Es wurde der über Transesterifikation vernetzende Polyester aus Beispiel II d) des europäischen Patents EP 40867 hergestellt.

<u>Beispiele 1 bis 5 und Vergleichsbeispiel</u>

Herstellung von Dispersionen

Die Komponenten (A) und (B) wurden in den unten angegebenen Verhältnissen gemischt und mit 10 Gew.%iger Essigsäure versetzt. Anschließend wurde durch langsame Wasserzugabe unter Rühren die Dispersion hergestellt.

| Dispersion von Beispiel | Komponente (A) | | Komponente (B) | | Essigsäure 10 gew.%ig | Wasser |
|---|---|---|---|---|---|---|
| 1 | 695 g | (A 1) | 298 g | (B 2) | 150 g | 3093 g |
| 2 | 695 g | (A 2) | 298 g | (B 1) | 150 g | 3093 g |
| 3*) | 695 g | (A 3) | 298 g | (B 3) | 180 g | 3153 g |
| 4 | 695 g | (A 2) | 298 g | (B 2) | 150 g | 3093 g |
| 5 | 695 g | (A 3) | 298 g | (B 2) | 150 g | 3093 g |
| Vergleichs-beispiel 1) | 695 g | (A 4) | 298 g | (B 2) | 250 g | 2993 g |

*) vor der Wasserzugabe wurden 15 g Bleioctoat (24 % Pb) zugesetzt

1) Vergleichsbeispiel: trotz erhöhtem Neutralisationsgrad war die Dispersion sehr grobteilig und setzte ab, so daß kein Lackbad hergestellt werden konnte.

Pigmentpaste:

Zu 525,8 g Komponente (A 1) gab man 168,7 g Butylglykol, 600 g Wasser und 16,5 g Essigsäure. Dann setzte man 800 g Titandioxid, 11,0 g Ruß und 50 g basisches Bleisilikat hinzu. Es wurde auf einer Kugelmühle bis zu einer Korngröße kleiner 9 $\mu$m gemahlen. Anschließend stellte man mit Wasser einen Feststoffgehalt von 49 Gew.% ein.

Elektrotauchbäder:

Zu der jeweiligen Dispersion gab man unter Rühren 764 g der Pigmentpaste. Die Bäder wurden 120 g bei 28°C gerührt. An kathodisch geschalteten zinkphosphatierten Prüftafeln aus Stahl wurden Lackfilme innerhalb 120 Sekunden bei der angegebenen Spannung abgeschieden und 20 Minuten bei 170°C eingebrannt. Die folgende Tabelle zeigt die Ergebnisse:
Ergebnisse der Lackprüfung, Schichtdicke 17 $\mu$m

| Bei-spiel | pH | Span-nung (V) | Umgriff nach Ford (cm) | Schlag-tiefung 3) (Nm) | Salzsprühtest nach ASTM Unterwanderung am Ritz | Lackober-fläche 1) |
|---|---|---|---|---|---|---|
| 1 | 7,6 | 300 | 23,0 | 18,08 | nach 500 Stunden 0,1 mm | 1 |
| 2 | 7,6 | 310 | 22,0 | 18,08 | nach 500 Stunden 0,2 mm | 1 |
| 3 | 7,15 | 300 | 20 | 18,08 | nach 500 Stunden 0,3 mm | 2 (leicht matt) |
| 4 | 7,7 | 320 | 22,5 | 18,08 | nach 500 Stunden 0,2 mm | 1 |
| 5 | 7,3 | 300 | 20,5 | 18,08 | nach 500 Stunden 0,1 mm | 1-2 |
| 7 2) | 8,0 | 290 | 22 | 18,08 | nach 500 Stunden 0,3 mm | 3 |

1) Beurteilung:
Note 1 sehr gut bis 6 ungenügend
2) entspricht Beispiel 7 der DE-OS 33 11 514
3) Die Schlagtiefe wurde mit einem mandrel impact tester der Fa. Gardner nach ASTM D 2794 bestimmt.

## Ansprüche

1. Bindemittel für die kathodische Elektrotauchlackierung auf Basis von stickstoffbasische Gruppen tragenden Polyadditions-/Polykondensationsprodukten, die durch Protonierung mit Säure wasserverdünnbar sind, und mindestens einem Vernetzer für diese Polyadditions-/Polykondensationsprodukte, bestehend im wesentlichen aus einem Gemisch aus

(A) 50 bis 90 Gew.% eines stickstoffbasische Gruppen tragenden Polyadditions-/Polykondensationsproduktes, erhältlich durch Umsetzung von

(a) einem im wesentlichen epoxidgruppenfreien Additionsprodukt aus sekundärem Amin und Polyepoxidverbindung mit

(b) einem Kondensationsprodukt aus einem Diamin/Polyepoxid-Additionsprodukt, das in Gegenwart eines Diaminüberschusses hergestellt und nach vollständiger Umsetzung der Epoxidgruppen von überschüssigem Diamin abgetrennt worden ist, mit mindestens einer Mono-und/oder Dicarbonsäure mit mindestens 6 Kohlenstoffatomen, mit der Maßgabe, daß die Umsetzung von (a) mit (b) bei Temperaturen zwischen etwa 100 und 250°C durchgeführt worden ist,
und

B) 10 bis 50 Gew.% eines Vernetzungsmittels, das bei Raumtemperatur mit Komponente (A) nicht reagiert, bei erhöhter Temperatur jedoch mit Komponente (A) unter Vernetzung reagiert,
wobei die Summe der unter (A) und (B) genannten Prozentzahlen 100 ist.

2. Bindemittel nach Anspruch 1, in denen das Kondensationsprodukt (b) aus Komponente (A) in Gegenwart der Komponente (a) hergestellt worden ist.

3. Bindemittel nach den Ansprüchen 1 und 2, in denen für mindestens ein Teil des für die Herstellung der Komponente (a) eingesetzten, sekundären Amins ein Amidgruppen enthaltendes sekundäres Amin verwendet wurde, das durch Umsetzung von Mono-und/oder Dicarbonsäuren mit mindestens 6 Kohlenstofatomen oder deren Estern mit Diaminen, die pro Molekül eine primäre und eine sekundäre Aminogruppe tragen, wobei die sekundäre Aminogruppe eine β-Hydroxyalkylgruppe trägt, erhalten worden ist.

4. Bindemittel nach den Ansprüchen 1 bis 3, in denen zur Herstellung der Komponente (b) als Dicarbonsäure eine dimerisierte ungesättigte $C_{10}$-$C_{24}$-Fettsäure ("Dimerfettsäure") verwendet wurde.

5. Bindemittel nach den Ansprüchen 1 bis 4, in denen zur Herstellung der Komponente (a) als sekundäres Amin ein Dialkylamin eingesetzt wird, das 2 bis 36 Kohlenstoffatome sowie gegebenenfalls noch weitere funktionelle Gruppen enthält.

6. Bindemittel nach den Ansprüchen 1 bis 5, in denen das Vernetzungsmittel (B) ein mehrwertiges geblocktes Isocyanat, ein Aminoplast-oder Phenoplastharz, ein mehrfach aminomethyliertes Polyphenol, ein über Esteraminolyse und/oder Umesterung härtender Vernetzer oder ein Harnstoffkondensationsprodukt ist.

7. Verwendung des durch Protonieren mit Säure wasserverdünnbaren Bindemittels gemäß den Ansprüchen 1 bis 6 in Form einer wäßrigen Dispersion, die gegebenenfalls Pigmente, organische Lösemittel und/oder weitere Hilfsstoffe enthält, als Überzugsmittel.

8. Wäßriges Lackbad für die kathodische Elektrotauchlackierung, enthaltend 5 bis 30 Gew.% des Bindemittels gemäß den Ansprüchen 1 bis 6.

9. Mit einem Lacküberzug versehene Gegenstände, erhalten mit den Bindemitteln gemäß den Ansprüchen 1 bis 6.

10. Verfahren zur Herstellung eines Bindemittels für die kathodische Elektrotauchlackierung auf Basis von stickstoffbasische Gruppen tragenden Polyadditions-/Polykondensationsprodukten, die durch Protonierung mit Säure wasserverdünnbar sind, und mindestens einem Vernetzer für diese Polyadditions-/Polykondensationsprodukte, dadurch gekennzeichnet, daß man im wesentlichen

(A) 50 bis 90 Gew.% eines stickstoffbasische Gruppen tragenden Polyadditions-/Polykondensationsproduktes, erhältlich durch Umsetzung von

(a) einem im wesentlichen epoxidgruppenfreien Additionsprodukt aus sekundärem Amin und Polyepoxidverbindung mit

(b) einem Kondensationsprodukt aus einem Diamin/Polyepoxid-Additionsprodukt, das in Gegenwart eines Diaminüberschusses hergestellt und nach vollständiger Umsetzung der Epoxidgruppen von überschüssigem Diamin abgetrennt worden ist, mit mindestens einer Mono-und/oder Dicarbonsäure mit mindestens 6 Kohlenstoffatomen, mit der Maßgabe, daß die Umsetzung von (a) mit (b) bei Temperaturen zwischen etwa 100 und 250°C durchgeführt worden ist, und

B) 10 bis 50 Gew.% eines Vernetzungsmittels, das bei Raumtemperatur mit Komponente (A) nicht reagiert, bei erhöhter Temperatur jedoch mit Komponente (A) unter Vernetzung reagiert, mischt, wobei die Summe der unter (A) und (B) genannten Prozentzahlen 100 ist.

Patentanspruch für folgende Vertragsstaten :AT,ES

Verfahren zur Herstellung eines Bindemittels für die kathodische Elektrotauchlackierung auf Basis von stickstoffbasische Gruppen tragenden Polyadditions-/Polykondensationsprodukten, die durch Protonierung mit Säure wasserverdünnbar sind, und mindestens einem Vernetzer für diese Polyadditions-/Polykondensationsprodukte, dadurch gekennzeichnet, daß man im wesentlichen

(A) 50 bis 90 Gew.% eines stickstoffbasische Gruppen tragenden Polyadditions-/Polykondensationsproduktes, erhältlich durch Umsetzung von

(a) einem im wesentlichen epoxidgruppenfreien Additionsprodukt aus sekundärem Amin und Polyepoxidverbindung mit

(b) einem Kondensationsprodukt aus einem Diamin/Polyepoxid-Additionsprodukt, das in Gegenwart eines Diaminüberschusses hergestellt und nach vollständiger Umsetzung der Epoxidgruppen von überschüssigem Diamin abgetrennt worden ist, mit mindestens einer Mono-und/oder Dicarbonsäure mit mindestens 6 Kohlenstoffatomen, mit der Maßgabe, daß die Umsetzung von (a) mit (b) bei Temperaturen zwischen etwa 100 und 250°C durchgeführt worden ist, und

B) 10 bis 50 Gew.% eines Vernetzungsmittels, das bei Raumtemperatur mit Komponente (A) nicht reagiert, bei erhöhter Temperatur jedoch mit Komponente (A) unter Vernetzung reagiert, mischt, wobei die Summe der unter (A) und (B) genannten Prozentzahlen 100 ist.